(19) Europäisches Patentamt
European Patent Office
Office européen des brevets

(11) EP 3 330 082 A1

(12) EUROPEAN PATENT APPLICATION

(43) Date of publication:
**06.06.2018 Bulletin 2018/23**

(21) Application number: **17203641.0**

(22) Date of filing: **24.11.2017**

(51) Int Cl.:
***B32B 27/30** (2006.01)*
***B32B 27/34** (2006.01)*
***B32B 27/36** (2006.01)*
***B32B 7/12** (2006.01)*
***B32B 27/08** (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.11.2016 JP 2016233188**

(71) Applicant: **LINTEC Corporation**
**Tokyo 173-0001 (JP)**

(72) Inventors:
- **MIYAZAKI, Kentaro**
  **Tokyo, 173-0001 (JP)**
- **TAYA, Naoki**
  **Tokyo, 173-0001 (JP)**

(74) Representative: **J A Kemp**
**14 South Square**
**Gray's Inn**
**London WC1R 5JJ (GB)**

# (54) RESIN SHEET, INDICATION LABEL, AND METHOD OF MANUFACTURING RESIN SHEET

(57) [Problems] Objects include providing a heat-shrinkable resin sheet and a heat-shrinkable indication label that have excellent barrier properties and providing a method of manufacturing the resin sheet.

[Solution] A resin sheet (1, 2) is provided which comprises a barrier film (10) having gas barrier properties to water vapor and oxygen and a shrink film (30) having heat shrinkability. The barrier film (10) and the shrink film (30) are laminated via an adhesive layer (20). The barrier film (10) comprises a material that contains an ethylenevinyl alcohol-based copolymer. The barrier film (10) constitutes at least one of outermost layers of the resin sheet (1, 2).

Fig. 1

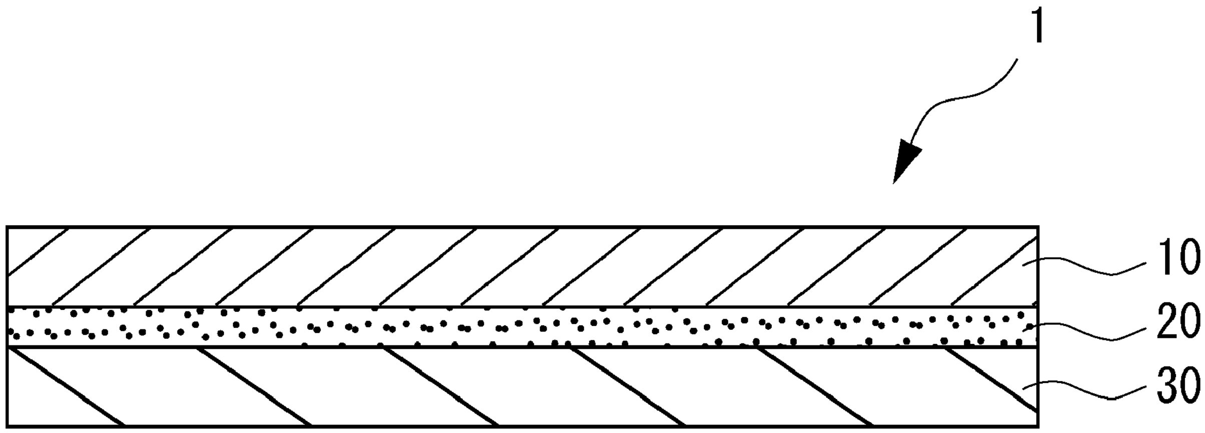




Printed by Jouve, 75001 PARIS (FR)

## Description

[Technical Field]

The present invention relates to a resin sheet, an indication label, and a method of manufacturing a resin sheet and, in particular, to a resin sheet that is suitably used as an indication label for pharmaceutical products or foods, such an indication label, and a method of manufacturing such a resin sheet.

[Background Art]

Shrink films that shrink by heating may be used as indication labels for products. In such usage, for example, a shrink film is formed into a bag-like shape or tubular shape. In a state in which a product or container is stored in the bag or tube, the shrink film is heated to shrink. This allows a state to be created in which the shrunk shrink film as an indication label is in close contact with the surface of the product or container. In particular, when the shrink film is used as an indication label for pharmaceutical products or foods, the shrunk shrink film can prevent opening of the pharmaceutical product or food at an unintended stage.

In recent years, containers for storing pharmaceutical products and foods have been changed from conventional glass containers to resin containers such as polyethylene, polypropylene and polyethylene terephthalate containers. In such resin containers, however, properties of blocking transmission of gases such as water vapor and oxygen (which may be referred to as "barrier properties," hereinafter) tend to be small as compared with glass containers. The above-described shrink films are therefore used as indication labels for pharmaceutical products and foods thereby to complement the barrier properties of resin containers.

In recent years, from the viewpoint of enhancing the barrier properties of the above-described shrink films, lamination of layers having barrier properties on the shrink films has also been performed. For example, Patent Literature 1 discloses a heat-shrinkable multilayer resin film composed of at least three layers: two outer surface layers formed of a polystyrene-based resin and an intermediate layer formed of an ethylene-vinyl alcohol-based copolymer. Patent Literature 1 also discloses an example in which the above heat-shrinkable multilayer resin film is manufactured by coextrusion molding of materials that constitute respective layers.

Patent Literature 2 discloses a heat-shrinkable gas barrier film configured such that an ethylene-vinyl alcohol resin layer is laminated on a heat-shrinkable film formed of a polyolefin-based resin. Patent Literature 2 also discloses an example in which the above heat-shrinkable gas barrier film is manufactured through coating one surface of the heat-shrinkable film with a coating liquid that contains an ethylene-vinyl alcohol resin and drying the coating liquid to form the ethylene-vinyl alcohol resin layer.

[Prior Art Literature]

[Patent Literature]

[Patent Literature 1] JP2008-284772A
[Patent Literature 2] JP2003-320627A

[Summary of the Invention]

[Problems to be solved by the Invention]

When a multilayer film is manufactured by extrusion molding as in the heat-shrinkable multilayer resin film disclosed in Patent Literature 1, however, available materials are restricted because the multilayer film cannot be well manufactured depending on the material to be used. For example, if a multilayer film is manufactured by coextrusion molding using polyethylene terephthalate as the material of a shrink film and ethylene-vinyl alcohol resin as the material of a film having barrier properties, interfacial adhesion between the shrink film and the film having barrier properties will be poor and delamination may occur at the interface between these films.

When a layer having barrier properties is formed by coating a shrink film with a material of the layer as in the heat-shrinkable gas barrier film disclosed in Patent Literature 2, it may be difficult to sufficiently increase the thickness of the layer having barrier properties. As a consequence, a heat-shrinkable gas barrier film having sufficient barrier properties cannot be manufactured.

The present invention has been made in consideration of such actual circumstances and an object of the

present invention is to provide a heat-shrinkable resin sheet and a heat-shrinkable indication label that have excellent barrier properties. Another object of the present invention is to provide a method of manufacturing the resin sheet.

[Means for solving the Problems]

To achieve the above objects, the present invention provides a resin sheet comprising a barrier film and a shrink film, the barrier film having gas barrier properties to water vapor and oxygen, the shrink film having heat shrinkability, the barrier film and the shrink film being laminated via an adhesive layer, the barrier film comprising a material that contains an ethylene-vinyl alcohol-based copolymer, the barrier film constituting at least one of outermost layers of the resin sheet (Invention 1) .

In the resin sheet according to the above invention (Invention 1), the barrier film comprises a material that contains an ethylene-vinyl alcohol-based copolymer, and can thereby achieve excellent barrier properties. Moreover, in the resin sheet, the barrier film and the shrink film are laminated via an adhesive layer and, therefore, a problem does not occur in that the thickness of the barrier film cannot be sufficiently thick. Also from this viewpoint, excellent barrier properties can be achieved. Furthermore, the resin sheet can be manufactured independently of the material of the shrink film because the barrier film and the shrink film are laminated via the adhesive layer, and possible candidates of the material can be increased. Heat shrinkage can thus be realized to match the usage.

In the above invention (Invention 1), the resin sheet may preferably further comprise a pressure sensitive adhesive layer at a side of the shrink film opposite to the barrier film (Invention 2).

In the above invention (Invention 1, 2), the resin sheet may preferably have a shrinkage ratio of 10% or more and 80% or less in an MD direction of the shrink film and 1% or more and 5% or less in a CD direction of the shrink film, wherein the shrinkage ratio is measured when the resin sheet is immersed in hot water of 90°C for 30 seconds (Invention 3).

In the above invention (Invention 1 to 3), when the resin sheet has a thickness of 50μm, the resin sheet may preferably have a water vapor transmission rate of 15 g $\cdot m^{-2} \cdot day^{-1}$ or less (Invention 4).

In the above invention (Invention 1 to 4), the content of an ethylene monomer in total monomers that constitute the ethylene-vinyl alcohol-based copolymer may preferably be 25 mol% or more and 70 mol% or less (Invention 5).

In the above invention (Invention 1 to 5), the shrink film may preferably comprise a material that contains polyethylene terephthalate (Invention 6).

In the above invention (Invention 1 to 6), the barrier film may preferably have a thickness of 5 μm or more and 50 μm or less (Invention 7).

In the above invention (Invention 1 to 7), the shrink film may preferably have a thickness of 10 μm or more and 80 μm or less (Invention 8).

Second, the present invention provides an indication label comprising: a barrier film having gas barrier properties to water vapor and oxygen; an adhesive layer laminated at one side of the barrier film; a shrink film laminated at a side of the adhesive layer opposite to the barrier film, the shrink film having heat shrinkability; and a pressure sensitive adhesive layer laminated at a side of the shrink film opposite to the adhesive layer, the barrier film comprising a material that contains an ethylene-vinyl alcohol-based copolymer (Invention 9).

In the above invention (Invention 9), the indication label may preferably further comprise a printing layer laminated at a side of the barrier film opposite to the adhesive layer (Invention 10).

In the above invention (Invention 9, 10), the indication label may preferably be used for pharmaceutical products or foods (Invention 11).

Third, the present invention provides a method of manufacturing the above resin sheet (Invention 1 to 8), the method comprising a step of attaching the barrier film and the shrink film to each other using an adhesive, the barrier film being preliminarily formed into a film-like shape, the shrink film being preliminarily formed into a film-like shape (Invention 12).

[Advantageous Effect of the Invention]

The resin sheet and indication label according to the present invention have excellent barrier properties and are heat shrinkable. According to the method of manufacturing of the present invention, such a resin sheet can be manufactured.

[Brief Description of Drawings]

FIG. 1 is a cross-sectional view of a resin sheet according to a first embodiment of the present invention.
FIG. 2 is a cross-sectional view of a resin sheet according to a second embodiment of the present invention.

FIG. 3 is a graph illustrating measurement results of a heat-shrinkage ratio (%) in the MD direction.
FIG. 4 is a graph illustrating measurement results of a heat-shrinkage ratio (%) in the CD direction.

[Embodiments for Carrying out the Invention]

Embodiments of the present invention will be described hereinafter.

<Resin Sheet>

FIG. 1 illustrates a cross-sectional view of a resin sheet 1 according to a first embodiment of the present invention. In the resin sheet 1 according to the first embodiment, a barrier film 10 having gas barrier properties to water vapor and oxygen and a shrink film 30 having heat shrinkability are laminated via an adhesive layer 20. In other words, it can be said that the barrier film 10 and the shrink film 30 adhere to each other via the adhesive layer 20 or the barrier film 10 and the shrink film 30 are attached to each other using the adhesive layer 20.

FIG. 2 illustrates a cross-sectional view of a resin sheet 2 according to a second embodiment of the present invention. In the resin sheet 2 according to the second embodiment, a barrier film 10 having gas barrier properties to water vapor and oxygen and a shrink film 30 having heat shrinkability are laminated via an adhesive layer 20, a pressure sensitive adhesive layer 40 is laminated on the surface of the shrink film 30 opposite to the barrier film 10, and a release sheet 50 is laminated on the surface of the pressure sensitive adhesive layer 40 opposite to the shrink film 30. In other words, with regard to the relationship between the barrier film 10 and the shrink film 30, it can be said that the barrier film 10 and the shrink film 30 adhere to each other via the adhesive layer 20 or the barrier film 10 and the shrink film 30 are attached to each other using the adhesive layer 20.

In the resin sheet 1, 2 according to the present embodiment, the barrier film 10 comprises a material that contains an ethylene-vinyl alcohol-based copolymer. In the resin sheet 1, 2 according to the present embodiment, the barrier film 10 constitutes one of outermost layers of the resin sheet 1, 2. In another embodiment, the barrier film 10 may constitute both of outermost layers of a resin sheet.

The barrier film 10 comprising a material that contains an ethylene-vinyl alcohol-based copolymer has excellent barrier properties to water vapor and oxygen. Accordingly, the resin sheet 1, 2 of the present embodiment which comprises the barrier film 10 also has considerably excellent barrier properties to water vapor and oxygen. Moreover, the resin sheet 1, 2 according to the present embodiment is configured such that the barrier film 10 and the shrink film 30 are laminated via the adhesive layer 20, and can therefore be well manufactured independently of the thickness of the barrier film 10. Thus, in the resin sheet 1, 2 of the present embodiment, a problem does not occur in that the thickness of the layer cannot be sufficiently thick when the shrink film is coated with a material having barrier properties to form a layer having barrier properties. Also from this viewpoint, the resin sheet 1, 2 can achieve excellent barrier properties.

Furthermore, the resin sheet 1, 2 according to the present embodiment includes the shrink film 30 and can thereby undergo heat shrinkage satisfactorily when heated. Here, ethylene-vinyl alcohol-based copolymer films scarcely have heat shrinkability. In a laminated film obtained by laminating an ethylene-vinyl alcohol-based copolymer film and a shrink film via an adhesive layer 20, therefore, it has conventionally been considered that the laminated film would not have sufficient heat shrinkability because the ethylene-vinyl alcohol-based copolymer film inhibits the heat shrinkability of the shrink film. However, fortunately, the present inventors have found that satisfactory heat shrinkability can be achieved when the shrink film 30 and the barrier film 10, which comprises a material that contains an ethylene-vinyl alcohol-based copolymer, are laminated via an adhesive layer. The present inventors have thus realized the resin sheet 1, 2 according to the present embodiment.

In addition, the resin sheet 1, 2 according to the present embodiment is manufactured through adhesion between the barrier film 10 and the shrink film 30 and, therefore, the problem of delamination of the films due to poor interfacial adhesion does not occur. Such a problem may occur when performing coextrusion molding of these films. Thus, in the resin sheet 1, 2 according to the present embodiment, various materials can be used for the shrink film 30, and the material can be appropriately selected thereby to realize various types of heat shrinkability in accordance with the usage.

1. Configuration of Resin Sheet

(1) Barrier Film

In the resin sheet 1, 2 according to the present embodiment, the barrier film 10 comprises a material that contains an ethylene-vinyl alcohol-based copolymer. Here, the ethylene-vinyl alcohol-based copolymer is a copolymer or its derivative that has at least an ethylene monomer and a vinyl alcohol monomer as constitutional units, and has a structure, for example, as represented by General Formula (1) below:

[Chemical Formula 1]

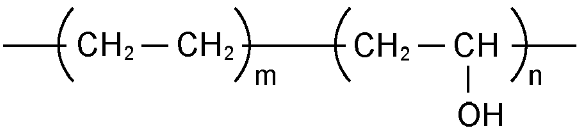 ··· (1)

where m and n independently represent positive integers.

The content of the ethylene monomer in the total monomers which constitute the ethylene-vinyl alcohol-based copolymer may be preferably 25 mol% or more and particularly preferably 30 mol% or more. From another aspect, the content may be preferably 70 mol% or less and particularly preferably 50 mol% or less. When the content of the ethylene monomer is within the above range, the barrier film 10 may readily exhibit excellent barrier properties, so that the resin sheet 1, 2 including the barrier film 10 may readily exhibit excellent barrier properties. In particular, when the content of the ethylene monomer is 25 mol% or more, the surface of the barrier film 10 is less likely to be sticky, and handling of the barrier film 10 alone may be easy.

From the viewpoint of exhibiting excellent barrier properties, the material which constitutes the barrier film 10 may preferably consist only of the ethylene-vinyl alcohol-based copolymer. Even when the material contains components other than the ethylene-vinyl alcohol-based copolymer, the content of the ethylene-vinyl alcohol-based copolymer in the material may be preferably 80 mass% or more and particularly preferably 90 mass% or more from the viewpoint of exhibiting excellent barrier properties. Examples of a commercially-available barrier film 10 include product name "EVAL" available from KURARAY CO., LTD. and product name "Soarnol" available from The Nippon Synthetic Chemical Industry Co., Ltd.

The barrier film 10 may preferably be formed into a film-like shape in advance before being laminated with the shrink film 30 via the adhesive layer 20. Such a method of forming the barrier film 10 is not particularly limited, provided that the resin sheet 1, 2 can exhibit excellent barrier properties to water vapor and oxygen. Examples to be employed as the method include an extrusion molding method and a method of coating a process sheet with the material of the barrier film 10 and drying the obtained coating film to form the barrier film 10 (this method may be referred to as a "casting method," hereinafter). In an alternative embodiment, the barrier film 10 may be formed into a film-like shape by extrusion lamination of the material of the barrier film 10 on the surface at the adhesive layer 20 side of a laminate of the adhesive layer 20 and the shrink film 30.

In the resin sheet 1, 2 according to the present embodiment, the water vapor transmission rate of the barrier film 10 when the thickness of the barrier film 10 is 50 μm may be preferably 15 $g \cdot m^{-2} \cdot day^{-1}$ or less, particularly preferably 13 $g \cdot m^{-2} \cdot day^{-1}$ or less, and further preferably 10 $g \cdot m^{-2} \cdot day^{-1}$ or less. When the water vapor transmission rate of the barrier film 10 is within the above range, the resin sheet 1, 2 may readily exhibit excellent barrier properties to water vapor. As used in the present description, the water vapor transmission rate is defined as a mass of water that passes through a region of 1 $m^2$ of a measurement object having a predetermined thickness for one day ($g \cdot m^{-2} \cdot day^{-1}$).

The above-described water vapor transmission rate of the barrier film 10 when the thickness of the barrier film 10 is 50μm can be obtained through measuring a water vapor transmission rate ($g \cdot m^{-2} \cdot day^{-1}$) of the barrier film 10 under a condition of temperature of 40°C and relative humidity of 90% using a transmission rate tester (product name "L80-5000" available from Lyssy AG) and applying the following equation (2) to the obtained water vapor transmission rate (actual measurement value) to calculate a water vapor transmission rate (50 μm equivalent) ($g \cdot m^{-2} \cdot day^{-1}$).

Water vapor transmission rate (50 μm equivalent) = Water vapor transmission rate (actual measurement value) × (thickness of resin sheet/50) ...(2)

In the resin sheet 1, 2 according to the present embodiment, the oxygen transmission rate of the barrier film 10 when the thickness of the barrier film 10 is 50μm may be preferably 10 $cc \cdot m^{-2} \cdot day^{-1} \cdot atm^{-1}$ or less, particularly preferably 5 $cc \cdot m^{-2} \cdot day^{-1} \cdot atm^{-1}$ or less, and further preferably 2 $cc \cdot m^{-2} \cdot day^{-1} \cdot atm^{-1}$ or less. When the oxygen transmission rate of the barrier film 10 is within the above range, the resin sheet 1, 2 may readily exhibit excellent barrier properties to oxygen. As used in the present description, the oxygen transmission rate is defined as a volume of oxygen that passes through a region of 1 $m^2$ of a measurement object having a predetermined thickness for one day ($cc \cdot m^{-2} \cdot day^{-1} \cdot atm^{-1}$).

The above-described oxygen transmission rate of the barrier film 10 when the thickness of the barrier film 10 is 50μm is to be measured in accordance with ISO14663-2. Specifically, the oxygen transmission rate can be obtained through measuring an oxygen transmission rate ($cc \cdot m^{-2} \cdot day^{-1} \cdot atm^{-1}$) of the barrier film 10 under a condition of temperature

of 20°C and relative humidity of 65% using a transmission rate tester and applying the following equation (3) to the obtained oxygen transmission rate (actual measurement value) to calculate an oxygen transmission rate (50 μm equivalent) ($cc \cdot m^{-2} \cdot day^{-1} \cdot atm^{-1}$).

Oxygen transmission rate (50 μm equivalent)=Oxygen transmission rate (actual measurement value)×(thickness of resin sheet/50) ...(3)

The thickness of the barrier film 10 may be preferably 5 μm or more, particularly preferably 8 μm or more, and further preferably 10 μm or more. From another aspect, the thickness of the barrier film 10 may be preferably 50 μm or less, particularly preferably 40 μm or less, and further preferably 30 μm or less. When the thickness of the barrier film 10 is 5 μm or more, the resin sheet 1, 2 can effectively exhibit excellent barrier properties. When the thickness of the barrier film 10 is 50 μm or less, the shrink film 30 may readily undergo heat shrinkage, and the resin sheet 1, 2 may readily exhibit desired heat shrinkability. It should be noted that the barrier film 10 having a relatively large thickness as the above can be used because the resin sheet 1, 2 according to the present embodiment is configured such that the barrier film 10 and the shrink film 30 are laminated via the adhesive layer 20.

(2) Shrink Film

In the resin sheet 1, 2 according to the present embodiment, the material of the shrink film 30 is not particularly limited, provided that the resin sheet 1, 2 can exhibit heat shrinkability, and commonly-used films as shrink films can be used. For example, the material of the shrink film 30 may contain at least one of a polyester-based resin, polystyrene-based resin, polyolefin-based resin, polyvinyl chloride-based resin, etc. In particular, from the viewpoint of readily exhibiting desired heat shrinkability, the shrink film 30 may preferably comprise a material that contains at least one of a polyester-based resin, polystyrene-based resin, and polyolefin-based resin. From the viewpoint of suitability for printed labels and the like due to small coefficient of thermal expansion and excellent dimensional stability, a polyester-based resin may be more preferred. The polyester-based resin may preferably comprise a material that contains polyethylene terephthalate. Polyethylene terephthalate as a material of the shrink film may have poor interfacial adhesion to an ethylene-vinyl alcohol-based copolymer film and it may be difficult to manufacture a multilayer film comprising these films satisfactorily by coextrusion molding. However, fortunately, the resin sheet 1, 2 according to the present embodiment can be manufactured well even when using the shrink film 30 comprising a material that contains polyethylene terephthalate, because the resin sheet 1, 2 is configured such that the barrier film 10, which comprises a material that contains an ethylene-vinyl alcohol-based copolymer, and the shrink film 30 are laminated via the adhesive layer 20.

The shrink film 30 may be a single layer or may also be a multilayer. Each layer that constitutes the shrink film 30 may be composed of a single resin or may also be composed of a plurality of resins. When the layer is composed of a plurality of resins, the resins may be copolymerized with each other or may also be blended.

The shrink film 30 may be formed into a film-like shape in advance before being laminated with the barrier film 10 via the adhesive layer 20. Such a shrink film 30 may be preferably obtained by an extrusion molding method and particularly preferably obtained by forming the material of the shrink film 30 into a film-like shape using an extrusion molding method and then performing uniaxial stretching or biaxial stretching. This allows the shrink film 30 to readily exhibit desired heat shrinkability, and the resin sheet 1, 2 including the shrink film 30 may more readily exhibit excellent heat shrinkability.

The thickness of the shrink film 30 may be preferably 10 μm or more and particularly preferably 20 μm or more. From another aspect, the thickness of the shrink film 30 may be preferably 80 μm or less and particularly preferably 50 μm or less. When the thickness of the shrink film 30 is within the above range, the resin sheet 1, 2 may readily exhibit desired heat shrinkability.

The ratio of the thickness of the barrier film 10 and the thickness of the shrink film 30 (thickness of barrier film 10/thickness of shrink film 30) may be preferably 0.05 or more, particularly preferably 0.1 or more, and further preferably 0.2 or more. From another aspect, the ratio may be preferably 1.0 or less, particularly preferably 0.8 or less, and further preferably 0.5 or less. When the ratio is 0.05 or more, the resin sheet 1, 2 may readily exhibit desired barrier properties to water vapor. When the ratio is 1.0 or less, the resin sheet 1, 2 may readily exhibit desired heat shrinkability. That is, the ratio within the above range allows the resin sheet 1, 2 to readily achieve both the desired barrier properties to water vapor and the desired heat shrinkability.

(3) Adhesive Layer

The material which constitutes the adhesive layer 20 is not particularly limited, provided that the shrink film 30 and the barrier film 10 can be laminated and the resin sheet 1, 2 according to the present embodiment can exhibit the barrier properties and heat shrinkability. For example, solvent-type adhesives, water-based adhesives, emulsion-type adhesives, solventless-type adhesives, remoistenable-type adhesives, polycondensation-type adhesives, photocurable-type resins, thermoset resins, and the like can be used.

Among the above materials, polyester-based adhesives, polyurethane-based adhesives, imine-based adhesives, acrylic-based adhesives and the like may be preferred, and polyester-based adhesives may be particularly preferable. From the viewpoints of stability of adhesion strength and water resistance, polyurethane-based adhesives may be preferred. The polyurethane-based adhesives are thermoset adhesives, and those of one-pack type or two-pack type may be used. Specific schemes include a scheme of compounding polyisocyanate and polyol such as polyether and polyester and curing them, a scheme of using a prepolymer, and a scheme of compounding polyisocyanate and an adhesive such as rubber-type, vinyl-type, and acrylic-type adhesives.

The glass-transition temperature (Tg) of the material which constitutes the adhesive layer 20 may be preferably equal to or lower than the temperature (shrinkage starting temperature) at which the shrink film 30 starts to shrink. Specifically, it may be preferably 100°C or lower in an embodiment, preferably 80°C or lower in another embodiment, and particularly preferably 70°C or lower. Here, when the material which constitutes the adhesive layer 20 is curable, the glass-transition temperature (Tg) refers to a glass-transition temperature (Tg) after the material is cured. The glass-transition temperature (Tg) equal to or lower than the shrinkage starting temperature allows the adhesive layer 20 to have moderate flexibility when the resin sheet 1, 2 undergoes heat shrinkage, and the resin sheet 1, 2 may readily exhibit desired heat shrinkability. The lower limit of the glass-transition temperature (Tg) of the material which constitutes the adhesive layer 20 is not particularly limited, provided that the adhesive layer 20 allows the shrink film 30 and the barrier film 10 to be laminated, but it may be preferably 10°C or higher in general and particularly preferably 20°C or higher. As used herein, the glass-transition temperature (Tg) refers to a value measured using a differential scanning calorimeter.

The thickness of the adhesive layer 20 may be preferably 0.5 μm or more and particularly preferably 1 μm or more. From another aspect, the thickness may be preferably 10 μm or less and particularly preferably 5 μm or less.

(4) Pressure Sensitive Adhesive Layer

The resin sheet 2 according to the present embodiment includes the pressure sensitive adhesive layer 40. More specifically, as illustrated in FIG. 2, the resin sheet 2 is provided with the pressure sensitive adhesive layer 40 at the side of the shrink film 30 opposite to the barrier film 10. By providing the adhesive layer 40 at the shrink film 30 side of the resin sheet 2 in such a manner, when the resin sheet 2 is used as a label for indication, the resin sheet 2 after heat shrinkage can be well fixed to a predetermined position of a container or product.

The pressure sensitive adhesive which constitutes the pressure sensitive adhesive layer 40 is not particularly limited, provided that the resin sheet 2 according to the present embodiment can exhibit the barrier properties and heat shrinkability. For example, acrylic-based, rubber-based, silicone-based, urethane-based, polyester-based, and polyvinyl ether-based pressure sensitive adhesives, etc. can be used. Among these, acrylic pressure sensitive adhesives may be preferred because they may readily exhibit good adhesive strength.

Among the above-described pressure sensitive adhesives, acrylic-based pressure sensitive adhesives may be preferred for the pressure sensitive adhesive which constitutes the pressure sensitive adhesive layer 40, because they may readily exhibit good adhesive strength. In particular, the pressure sensitive adhesive may preferably be formed of a pressure sensitive adhesive composition that contains a block copolymer of an acrylic-based monomer. Such a pressure sensitive adhesive formed of a pressure sensitive adhesive composition that contains a block copolymer of an acrylic-based monomer may include a small amount of components, such as residual monomers, solvents, and additives, which migrate from the pressure sensitive adhesive to an adherend. The resin sheet 2 including the pressure sensitive adhesive layer 40 obtained using such a pressure sensitive adhesive may therefore be suitable as an indication label for products, such as pharmaceutical products and foods, which are required to avoid contamination.

The thickness of the pressure sensitive adhesive layer 40 may be, for example, preferably 5 μm or more and particularly preferably 10 μm or more. From another aspect, the thickness may be, for example, preferably 50 μm or less and particularly preferably 40 μm or less.

(5) Release Sheet

In the resin sheet 2 according to the present embodiment, for the purpose of protecting the surface of the pressure sensitive adhesive layer 40 opposite to the shrink film 30 until the surface is attached to a container, the release sheet 50 may be laminated on the surface. The configuration of the release sheet 50 may be freely determined. Examples

of the release sheet 50 include those in which release treatment is performed for a plastic film, such as using a release agent. Specific examples of the plastic film include films of polyester, such as polyethylene terephthalate, polybutylene terephthalate and polyethylene naphthalate, and films of polyolefin, such as polypropylene and polyethylene. Examples to be used as the release agent include silicone-based, fluorine-based, and long-chain alkyl-based release agents, among which the silicone-based release agent may be preferred because stable performance can be obtained at low cost. The thickness of the release sheet 50 is not particularly restricted, but may ordinarily be 20 μm or more and 250 μm or less.

2. Physical Properties of Resin Sheet

In the resin sheet 1, 2 according to the present embodiment, the shrinkage ratio of the resin sheet 1, 2 when the resin sheet 1, 2 is immersed in hot water of 90°C for 30 seconds may be preferably 10% or more, particularly preferably 15% or more, and further preferably 20% or more in the MD direction of the shrink film 30. From another aspect, the shrinkage ratio may be preferably 80% or less, particularly preferably 70% or less, and further preferably 60% or less in the MD direction of the shrink film 30. The shrinkage ratio of the resin sheet 1, 2 when the resin sheet 1, 2 is immersed in hot water of 90°C for 30 seconds may be preferably 1% or more in the CD direction of the shrink film 30. From another aspect, the shrinkage ratio may be preferably 5% or less, particularly preferably 4% or less, and further preferably 3% or less in the CD direction of the shrink film 30. When the shrinkage ratio of the resin sheet 1, 2 is within the above range, the resin sheet 1, 2 after heat shrinkage can be more satisfactorily brought into close contact with a product. Details of the method of measuring the above shrinkage ratio are as described in the exemplary test, which will be described later.
As used herein, the shrinkage ratio of the resin sheet 2 refers to a shrinkage ratio measured for a laminate that does not include the release sheet 50, that is, a laminate obtained by removing the release sheet 50 from the resin sheet 2. The "MD direction" of the shrink film 30 refers to a flow direction when the shrink film 30 is manufactured by extrusion molding. The "CD direction" of the shrink film 30 refers to a direction perpendicular to the MD direction.
In the resin sheet 1, 2 according to the present embodiment, the water vapor transmission rate of the resin sheet 1, 2 when the thickness of the resin sheet 1, 2 is 50 μm may be preferably 15 $g \cdot m^{-2} \cdot day^{-1}$ or less, particularly preferably 13 $g \cdot m^{-2} \cdot day^{-1}$ or less, and further preferably 10 $g \cdot m^{-2} \cdot day^{-1}$ or less. In the resin sheet 1, 2 according to the present embodiment, the barrier film 10 comprises a material that contains an ethylene-vinyl alcohol-based copolymer, and the barrier film 10 and the shrink film 30 are laminated via the adhesive layer 20. A low water vapor transmission rate as described above can thereby be achieved. Details of the method of measuring the above water vapor transmission rate are as described in the exemplary test, which will be described later.
As used herein, the water vapor transmission rate of the resin sheet 2 refers to a water vapor transmission rate measured for a laminate that does not include the release sheet 50, that is, a laminate obtained by removing the release sheet 50 from the resin sheet 2.
In the resin sheet 1, 2 according to the present embodiment, the oxygen transmission rate of the resin sheet 1, 2 when the thickness of the resin sheet 1, 2 is 50μm may be preferably 10 $cc \cdot m^{-2} \cdot day^{-1} \cdot atm^{-1}$ or less, particularly preferably 5 $cc \cdot m^{-2} \cdot day^{-1} \cdot atm^{-1}$ or less, and further preferably 2 $cc \cdot m^{-2} \cdot day^{-1} \cdot atm^{-1}$ or less. In the resin sheet 1, 2 according to the present embodiment, the barrier film 10 comprises a material that contains an ethylene-vinyl alcohol-based copolymer, and the barrier film 10 and the shrink film 30 are laminated via the adhesive layer 20. A low oxygen transmission rate as described above can thereby be achieved. The above oxygen transmission rate is to be measured in accordance with ISO14663-2. Details of the method of measurement are as described in the exemplary test, which will be described later.
As used herein, the oxygen transmission rate of the resin sheet 2 refers to an oxygen transmission rate measured for a laminate that does not include the release sheet 50, that is, a laminate obtained by removing the release sheet 50 from the resin sheet 2.

3. Method of Manufacturing Resin Sheet

The resin sheet 1, 2 according to the present embodiment can be manufactured by a method comprising a step of attaching the barrier film 10, which is preliminarily formed into a film-like shape, and the shrink film 30, which is preliminarily formed into a film-like shape, to each other using an adhesive.
When the resin sheet 1, 2 is manufactured by that method, the barrier film 10 having a relatively large thickness can be used, unlike the case of forming the barrier film 10 by the casting method, and the excellent barrier properties can readily be achieved in the resin sheet 1, 2. Moreover, when the resin sheet 1, 2 is manufactured by that method, the barrier film 10 and the shrink film 30 can be well attached to each other, unlike the case of performing coextrusion molding of the barrier film 10 and the shrink film 30, and separation is less likely to occur between these films.
When the resin sheet 1 is manufactured, the resin sheet 1 can be obtained, for example, through coating one

surface of the barrier film 10 with an adhesive to obtain a laminate comprising the barrier film 10 and the adhesive layer 20 and then attaching the surface of the adhesive layer 20 of the laminate opposite to the barrier film 10 and one surface of the shrink film 30 to each other. In an alternative embodiment, the resin sheet 1 may be obtained through coating one surface of the shrink film 30 with an adhesive to obtain a laminate comprising the shrink film 30 and the adhesive layer 20 and then attaching the surface of the adhesive layer 20 of the laminate opposite to the shrink film 30 and one surface of the barrier film 10 to each other.

When the barrier film 10 and the shrink film 30 are each produced through extrusion molding, the above step of attaching the barrier film 10 and the shrink film 30 to each other may include adjusting the relationship between the MD direction of the barrier film 10 and the MD direction of the shrink film 30 in accordance with the usage. For example, when the barrier film 10 and the shrink film 30 are attached to each other so that their MD directions are parallel, it is possible to obtain the resin sheet 1 which can effectively shrink in the direction.

The method of coating with an adhesive is not particular limited. For example, the method may include preparing a coating liquid that contains an adhesive composition for forming an adhesive and, if desired, further contains a solvent or dispersion medium, coating one surface of the barrier film 10 or the shrink film 30 with the prepared coating liquid using an appropriate coater, such as a die coater, curtain coater, spray coater, slit coater, knife coater, gravure, and Comma coater (registered trademark), to form a coating film, and drying the coating film to form the adhesive layer 20. Properties of the coating liquid are not particularly limited, provided that coating can be performed using the coating liquid. The components for forming the adhesive layer 20 may each be contained as a solute and/or a dispersant.

Another method of manufacturing the resin sheet 1 may include preliminarily forming the shrink film 30 into a film-like shape, laminating the adhesive layer 20 at one side of the shrink film 30 to obtain a laminate comprising the shrink film 30 and the adhesive layer 20, and then forming the barrier film 10 on the adhesive layer 20 of the laminate by extrusion lamination of a material that contains an ethylene-vinyl alcohol-based copolymer.

The resin sheet 2 including the pressure sensitive adhesive layer 40 can be manufactured, for example, by laminating the pressure sensitive adhesive layer 40 on the surface at the shrink film 30 side of the resin sheet 1 manufactured as the above. In an alternative embodiment, the resin sheet 2 may be manufactured through preliminarily producing a laminate in which the pressure sensitive adhesive layer 40 is formed on one surface of the shrink film 30 and using the laminate as substitute for the shrink film 30 in the above method of manufacturing the resin sheet 1.

The method of forming the pressure sensitive adhesive layer 40 is not particularly limited and can be formed, for example, by an extrusion molding method or a coating method.

In particular, it may be preferred to form the pressure sensitive adhesive layer 40 by extrusion molding. In this case, the pressure sensitive adhesive layer 40 can be formed without using a solvent. Formation of the pressure sensitive adhesive layer 40 by extrusion molding is therefore suitable when the resin sheet 2 is used as an indication label for the use in which the residual solvent from the pressure sensitive adhesive layer 40 may have an adverse effect. A method of forming the pressure sensitive adhesive layer 40 by extrusion molding may include, for example, melting and kneading a pressure sensitive adhesive composition for obtaining the previously-described pressure sensitive adhesive using a T-die film-forming machine or the like and performing extrusion lamination of the molten pressure sensitive adhesive composition between the surface at the shrink film 30 side of the resin sheet 1 and the release surface of the release sheet 50 while moving the resin sheet 1 at a constant speed.

A method of forming the pressure sensitive adhesive layer 40 by a coating method may include, for example, preparing a coating liquid that contains a pressure sensitive adhesive composition for obtaining the previously-described pressure sensitive adhesive and, if desired, further contains a solvent or dispersion medium, coating one surface of a process sheet with the prepared coating liquid using an appropriate coater, such as a die coater, curtain coater, spray coater, slit coater, knife coater, and Comma coater (registered trademark), to form a coating film, and drying the coating film to form the pressure sensitive adhesive layer 40. Properties of the coating liquid are not particularly limited, provided that coating can be performed using the coating liquid. The components for forming the pressure sensitive adhesive layer 40 may each be contained as a solute and/or a dispersant. The pressure sensitive adhesive layer 40 formed in such a manner can be transferred to the surface at the shrink film 30 side of the resin sheet 1. In an embodiment, it may be preferred to use the release sheet 50 as the above process sheet and form the pressure sensitive adhesive layer 40 as described above on the surface of the release sheet 50 for which release treatment is performed (this surface may be referred to as a "release surface," herein).

4. Method of using Resin Sheet

The resin sheet 1, 2 according to the present embodiment can be used as an indication label for products. In this case, for example, the resin sheet 1, 2 may be formed into a bag-like shape or tubular shape. After a product or a container storing the product is stored in the bag or tube, the resin sheet 1, 2 may be heated to shrink. The resin sheet 1, 2 according to the present embodiment includes the shrink film 30 thereby to exhibit excellent heat shrinkability and can well shrink. This shrinkage allows the resin sheet 1, 2 to be in close contact with the surface of the product or

container. In particular, the resin sheet 2 including the pressure sensitive adhesive layer 40 can be used to attach the resin sheet 2 to a predetermined position of the product or container before the heat shrinkage. This allows the resin sheet 2 after the heat shrinkage to be well fixed to the predetermined position of the product or container.

The heating condition for the heat shrinkage can be the same as that for heat shrinkage of general shrink films. For example, from the viewpoint of achieving good heat shrinkage, the resin sheet 1, 2 may be preferably heated to 150°C or higher and particularly preferably to 180°C or higher. From another aspect, that is, from the viewpoint of avoiding a change in the quality of the resin sheet 1, 2 and the product, the temperature when heating the resin sheet 1, 2 may be preferably 250°C or lower and particularly preferably 230°C or less, as the heating condition. The method of heating the resin sheet 1, 2 may be the same as that for heating of general shrink films. Examples of the method include a method of heating using an oven, a method of heating using a heat gun, and a method of immersion in a hot-liquid bath.

The resin sheet 1, 2 according to the present embodiment may preferably be used as an indication label in which printing is performed on the surface of the barrier film 10 opposite to the shrink film 30. When printing is performed on the surface of the barrier film opposite to the shrink film 30 in this manner, the visibility does not deteriorate because a good printed surface can be obtained even after the heat shrinkage. The resin sheet 1, 2 is thus suitable when used as an indication label.

It may be preferred to use the resin sheet 1, 2 according to the present embodiment as an indication label for products. In the resin sheet 1, 2 according to the present embodiment, the barrier film 10 comprises a material that contains an ethylene-vinyl alcohol-based copolymer, and the barrier film 10 and the shrink film 30 are laminated via the adhesive layer 20. The resin sheet 1, 2 can thereby exhibit excellent barrier properties to water vapor and oxygen. The resin sheet 1, 2 according to the present embodiment is therefore suitable as an indication label for products that are required to avoid contact with external water vapor and oxygen as much as possible in order to suppress changes in the quality and, specifically, suitable as an indication label for pharmaceutical products or foods.

<Indication Label>

The indication label according to the present embodiment comprises the resin sheet 1, 2 according to the present embodiment at least as a part that constitutes the indication label. In particular, the indication label according to the present embodiment may preferably comprise the resin sheet 2 according to the present embodiment at least as a part that constitutes the indication label. Specifically, the indication label may preferably comprise a barrier film 10 having gas barrier properties to water vapor and oxygen, an adhesive layer 20 laminated at one side of the barrier film 10, a shrink film 30 laminated at the side of the adhesive layer 20 opposite to the barrier film 10 and having heat shrinkability, and a pressure sensitive adhesive layer 40 laminated at the side of the shrink film 30 opposite to the adhesive layer 20. The barrier film 10 may preferably comprise a material that contains an ethylene-vinyl alcohol-based copolymer. In an embodiment of the indication label, for the purpose of protecting the surface of the pressure sensitive adhesive layer 40 opposite to the shrink film 30 until the surface is attached to a container, a release sheet 50 as previously described may be laminated on the surface.

In the indication label according to the present embodiment, the barrier film 10 comprises a material that contains an ethylene-vinyl alcohol-based copolymer, and the barrier film 10 and the shrink film 30 are laminated via the adhesive layer 20. The indication label can thereby exhibit excellent barrier properties to water vapor and oxygen. The indication label according to the present embodiment is therefore suitable as an indication label for products that are required to avoid contact with external water vapor and oxygen as much as possible in order to suppress changes in the quality and, specifically, suitable as an indication label for pharmaceutical products or foods.

The indication label according to the present embodiment may further comprise a printing layer laminated at the side of the barrier film 10 opposite to the adhesive layer 20. The printing layer may be a layer configured such that printing is performed at the side of the barrier film 10 opposite to the adhesive layer 20 using a conventionally-known scheme. When the indication label includes such a printing layer, it is possible to well perform desired indication using the indication label.

It should be appreciated that the embodiments heretofore explained are described to facilitate understanding of the present invention and are not described to limit the present invention. It is therefore intended that the elements disclosed in the above embodiments include all design changes and equivalents to fall within the technical scope of the present invention.

For example, in the resin sheet 1, 2 according to the present embodiment, one or more other layers may be laminated in addition to the barrier film 10, the adhesive layer 20, the shrink film 30, and the pressure sensitive adhesive layer 40.

[Examples]

Hereinafter, the present invention will be described further specifically with reference to examples, etc., but the

scope of the present invention is not limited to these examples, etc.

<Example 1>

One surface of an ethylene-vinyl alcohol-based copolymer film (product name "EVAL EF-F15" available from KURARAY CO., LTD., non-stretching type, thickness: 15 μm, content of ethylene monomer in total monomer constituting ethylene-vinyl alcohol-based copolymer: 32 mol%, content of vinyl alcohol monomer: 68 mol%) as a barrier film was coated with a polyester-based adhesive (Tg: 60°C) and the obtained coating film was dried at 100°C in an oven for one minute to obtain a laminate comprising an adhesive layer having a thickness of 3 μm and the barrier film.

A resin sheet was obtained by attaching the surface of the adhesive layer opposite to the barrier film of the obtained laminate and one surface of a heat-shrinkable polyethylene terephthalate film (product name "Bellfine LS/102" available from Daiwa Can Company, thickness: 35 μm, shrinkage starting temperature: 70°C) as a shrink film to each other.

<Example 2>

A resin sheet was obtained in the same manner as in Example 1 except that an ethylene-vinyl alcohol-based copolymer film (product name "EVAL EF-XL12" available from KURARAY CO., LTD., biaxial stretching type, thickness: 12 μm, content of ethylene monomer in total monomer constituting ethylene-vinyl alcohol-based copolymer: 32 mol%, content of vinyl alcohol monomer: 68 mol%) was used as a barrier film.

<Example 3>

A release sheet (product name "SP-PET381031" available from LINTEC Corporation, thickness: 38 μm) was prepared in which a silicone-based release agent layer was formed on one surface of a polyethylene terephthalate film. The release treatment surface of the release sheet was coated with an acrylic-based pressure sensitive adhesive (product name "PAT1" available from LINTEC Corporation), which was then dried to obtain a release sheet with a pressure sensitive adhesive layer having a thickness of 20 μm.

The surface at the pressure sensitive adhesive layer side of the obtained release sheet with the pressure sensitive adhesive layer and the surface at the shrink film side of a resin sheet manufactured as in Example 1 were attached to each other, and the release sheet was then removed from the pressure sensitive adhesive layer to transfer the pressure sensitive adhesive layer to the resin sheet manufactured as in Example 1. A resin sheet was thus obtained in which the barrier film, the adhesive layer, the shrink film, and the pressure sensitive adhesive layer were laminated in this order.

<Example 4>

A release sheet (product name "SP-PET381031" available from LINTEC Corporation, thickness: 38 μm) was prepared in which a silicone-based release agent layer was formed on one surface of a polyethylene terephthalate film. The release treatment surface of the release sheet was coated with an acrylic-based pressure sensitive adhesive (product name "PAT1" available from LINTEC Corporation), which was then dried to obtain a release sheet with a pressure sensitive adhesive layer having a thickness of 20 μm.

The surface at the pressure sensitive adhesive layer side of the obtained release sheet with the pressure sensitive adhesive layer and the surface at the shrink film side of a resin sheet manufactured as in Example 2 were attached to each other, and the release sheet was then removed from the pressure sensitive adhesive layer to transfer the pressure sensitive adhesive layer to the resin sheet manufactured as in Example 2. A resin sheet was thus obtained in which the barrier film, the adhesive layer, the shrink film, and the pressure sensitive adhesive layer were laminated in this order.

<Comparative Example 1>

A heat-shrinkable polyethylene terephthalate film (product name "Bellfine LS/102" available from Daiwa Can Company, thickness: 35 μm) as a shrink film was prepared and this was employed as a resin sheet.

<Comparative Example 2>

An ethylene-vinyl alcohol-based copolymer film (product name "EVAL EF-XL12" available from KURARAY CO., LTD., non-stretching type, thickness: 12 μm, content of ethylene monomer in total monomer constituting ethylene-vinyl alcohol-based copolymer: 32 mol%, content of vinyl alcohol monomer: 68 mol%) as a barrier film was prepared and this was employed as a resin sheet.

<Exemplary Test 1> (Measurement of Heat-shrinkage Ratio)

From the resin sheet produced in each of the examples and comparative examples, four samples having a width of 10 mm and a length of 120 mm in the longitudinal direction of the MD direction and four samples having a width of 10 mm and a length of 120 mm in the longitudinal direction of the CD direction were cut out in respective directions. Then, each sample was marked with a gauge line of a length of 100 mm parallel to the longitudinal direction and employed as a sample for evaluation.

The obtained samples for evaluation were immersed in hot water of 60°C, 70°C, 80°C, and 90°C for 30 seconds.

Then, with regard to each evaluation sample of the MD direction after immersion, the length $L_{MD}$ of the gauge line parallel to the MD direction of the shrink film was measured and the heat-shrinkage ratio (%) in the MD direction was calculated from the following equation (4). Results are listed in Table 1. FIG. 3 illustrates a graph in which the vertical axis represents the heat-shrinkage ratio (%) in the MD direction and the horizontal axis represents the temperature (°C) of hot water.

$$\text{Heat-shrinkage ratio (\%) in MD direction} = \{(100-L_{MD})/100\}\times 100 \quad \dots(4)$$

With regard to each evaluation sample of the CD direction after immersion, the length $L_{CD}$ of the gauge line parallel to the CD direction of the shrink film was measured and the heat-shrinkage ratio (%) in the CD direction was calculated from the following equation (5) . Results are listed in Table 1. FIG. 4 illustrates a graph in which the vertical axis represents the heat-shrinkage ratio (%) in the CD direction and the horizontal axis represents the temperature (°C) of hot water.

$$\text{Heat-shrinkage ratio (\%) in CD direction} = \{(100-L_{CD})/100\}\times 100 \quad \dots(5)$$

<Exemplary Test 2> (Measurement of Water Vapor Transmission Rate)

With regard to the resin sheet produced in each of the examples and comparative examples, the water vapor transmission rate ($g\cdot m^{-2}\cdot day^{-1}$) was measured under a condition of temperature of 40°C and relative humidity of 90% using a water vapor transmission rate tester (product name "L80-5000" available from Lyssy AG). The obtained water vapor transmission rate (actual measurement value) was used to calculate a water vapor transmission rate ($g\cdot m^{-2}\cdot day^{-1}$) when the thickness of the resin sheet was 50μm (i.e. 50 μm equivalent) from the following equation (6). Results are listed in Table 1.

$$\text{Water vapor transmission rate (50 μm equivalent)} = \text{Water vapor transmission rate (actual measurement value)} \times (\text{thickness of resin sheet}/50) \quad \dots(6)$$

<Exemplary Test 3> (Measurement of Oxygen Transmission Rate)

With regard to the resin sheet produced in each of the examples and comparative examples, the oxygen transmission rate ($cc\cdot m^{-2}\cdot day^{-1}\cdot atm^{-1}$) was measured in accordance with ISO14663-2 under a condition of temperature of 20°C and relative humidity of 65% using an oxygen transmission rate tester. The obtained oxygen transmission rate (actual measurement value) was used to calculate an oxygen transmission rate ($cc\cdot m^{-2}\cdot day^{-1}\cdot atm^{-1}$) when the thickness of the resin sheet was 50μm (i.e. 50 μm equivalent) from the following equation (7). Results are listed in Table 1.

$$\text{Oxygen transmission rate (50 µm equivalent)} = \text{Oxygen transmission rate (actual measurement value)} \times (\text{thickness of resin sheet}/50) \quad \ldots(7)$$

<Exemplary Test 4> (Evaluation of Appearance after Heat Shrinkage)

The resin sheet produced in each of the examples and comparative examples was used to cover a product for test as a whole so that the barrier film was located outside. Then, the product covered by the resin sheet was passed through a shrink tunnel heated to 160°C for heat shrinkage. Appearance of the resin sheet after heat shrinkage was visually observed and evaluated in accordance with the following criteria.

○: The entire resin sheet after shrinkage was in close contact with the product.
×: A site occurred in which the resin sheet after shrinkage was not in close contact with the product.

Details of brief references or the like in Table 1 are as follows.

«Barrier Film»

EVAL EF-F15: Ethylene-vinyl alcohol-based copolymer film (product name "EVAL EF-F15" available from KURARAY CO., LTD., non-stretching type, thickness: 15 µm, content of ethylene monomer in total monomer constituting ethylene-vinyl alcohol-based copolymer: 32 mol%, content of vinyl alcohol monomer: 68 mol%)
EVAL EF-XL12: Ethylene-vinyl alcohol-based copolymer film (product name "EVAL EF-XL12" available from KURARAY CO., LTD., biaxial stretching type, thickness: 12 µm, content of ethylene monomer in total monomer constituting ethylene-vinyl alcohol-based copolymer: 32 mol%, content of vinyl alcohol monomer: 68 mol%)

«Shrink Film»

Bellfine LS/102: Heat-shrinkable polyethylene terephthalate film (product name "Bellfine LS/102" available from Daiwa Can Company, thickness: 35 µm, shrinkage starting temperature: 70°C)

[Table 1]

| | Barrier film | | Adhesive layer | Shrink film | | Pressure sensitive adhesive layer | Thickness of sheet resin ($\mu$m) | Ratio of thicknesses of barrier film and shrink film (Barrier film/Shrink film) | Heat-shrinkage ratio (%) (Upper column: MD direction, Lower column: CD direction) | | | | Water vapor transmission rate (50 $\mu$m equivalent) ($g \cdot m^{-2} \cdot day^{-1}$) | Oxygen transmission rate (50 $\mu$m equivalent) ($cc \cdot m^{-2} \cdot day^{-1} \cdot atm^{-1}$) | Appearance after heat shrinkage |
|---|---|---|---|---|---|---|---|---|---|---|---|---|---|---|---|
| | Material | Thickness ($\mu$m) | Thickness ($\mu$m) | Material | Thickness ($\mu$m) | Thickness ($\mu$m) | | | 60°C | 70°C | 80°C | 90°C | | | |
| Example 1 | EVAL EF-F15 | 15 | 3 | Bellfine LS/102 | 35 | - | 53 | 0.43 | 0.5 | 7.5 | 13 | 16 | 8.0 | 0.94 | ○ |
| | | | | | | | | | 0.5 | 0 | 0.5 | 3 | | | |
| Example 2 | EVAL EF-XL 12 | 12 | 3 | Bellfine LS/102 | 35 | - | 50 | 0.34 | 0.5 | 10.5 | 18 | 23 | 7.0 | 0.80 | ○ |
| | | | | | | | | | 0 | 0.5 | 2 | 5 | | | |
| Example 3 | EVAL EF-F15 | 15 | 3 | Bellfine LS/102 | 35 | 20 | 73 | 0.43 | 0.5 | 75 | 13 | 16 | 8.0 | 0.94 | ○ |
| | | | | | | | | | 0.5 | 0 | 0.5 | 3 | | | |
| Example 4 | EVAL EF-XL 12 | 12 | 3 | Bellfine LS/102 | 35 | 20 | 70 | 0.34 | 0.5 | 10.5 | 18 | 23 | 7.0 | 0.80 | ○ |
| | | | | | | | | | 0 | 05 | 2 | 5 | | | |
| Comparative Example 1 | - | - | - | Bellfine LS/102 | 35 | - | 35 | 0.00 | 0 | 6 | 21 | 25 | 17.4 | 40 | ○ |
| | | | | | | | | | 0 | 2 | 3 | 5 | | | |
| Comparative Example 2 | EVAL EF-XL 12 | 12 | - | - | - | - | 12 | - | 0 | 0 | -0.2 | -1.0 | 5.6 | 0.81 | × |
| | | | | | | | | | 0 | 0 | -0.1 | -0.4 | | | |

As apparent from Table 1, all of the heat-shrinkage ratio, the water vapor transmission rate, and the oxygen transmission rate are satisfactory values in the resin sheets manufactured in the examples. That is, the resin sheets of the examples are excellent in the heat shrinkability and also excellent in the barrier properties to water vapor and oxygen.

[Industrial Applicability]

The resin sheet according to the present invention is suitable as an indication label for products that are required to avoid contact with external water vapor and oxygen as much as possible in order to suppress changes in the quality and, specifically, suitable as an indication label for pharmaceutical products or foods.

[Description of Reference Numerals]

1, 2 Resin sheet
10 Barrier film
20 Adhesive layer
30 Shrink film
40 Pressure sensitive adhesive layer
50 Release sheet

## Claims

1. A resin sheet comprising a barrier film and a shrink film, the barrier film having gas barrier properties to water vapor and oxygen, the shrink film having heat shrinkability, the barrier film and the shrink film being laminated via an adhesive layer,
the barrier film comprising a material that contains an ethylene-vinyl alcohol-based copolymer,
the barrier film constituting at least one of outermost layers of the resin sheet.

2. The resin sheet as recited in claim 1, further comprising a pressure sensitive adhesive layer at a side of the shrink film opposite to the barrier film.

3. The resin sheet as recited in claim 1 or 2, wherein the resin sheet has a shrinkage ratio of 10% or more and 80% or less in an MD direction of the shrink film and 1% or more and 5% or less in a CD direction of the shrink film, wherein the shrinkage ratio is measured when the resin sheet is immersed in hot water of 90°C for 30 seconds.

4. The resin sheet as recited in any one of claims 1 to 3, wherein, when the resin sheet has a thickness of 50μm, the resin sheet has a water vapor transmission rate of 15 $g \cdot m^{-2} \cdot day^{-1}$ or less.

5. The resin sheet as recited in any one of claims 1 to 4, wherein a content of an ethylene monomer in total monomers that constitute the ethylene-vinyl alcohol-based copolymer is 25 mol% or more and 70 mol% or less.

6. The resin sheet as recited in any one of claims 1 to 5, wherein the shrink film comprises a material that contains polyethylene terephthalate.

7. The resin sheet as recited in any one of claims 1 to 6, wherein the barrier film has a thickness of 5 μm or more and 50 μm or less.

8. The resin sheet as recited in any one of claims 1 to 7, wherein the shrink film has a thickness of 10 μm or more and 80 μm or less.

9. An indication label comprising:

a barrier film having gas barrier properties to water vapor and oxygen;
an adhesive layer laminated at one side of the barrier film;
a shrink film laminated at a side of the adhesive layer opposite to the barrier film, the shrink film having heat shrinkability; and

a pressure sensitive adhesive layer laminated at a side of the shrink film opposite to the adhesive layer, the barrier film comprising a material that contains an ethylene-vinyl alcohol-based copolymer.

**10.** The indication label as recited in claim 9, further comprising a printing layer laminated at a side of the barrier film opposite to the adhesive layer.

**11.** The indication label as recited in claim 9 or 10, wherein the indication label is to be used for pharmaceutical products or foods.

**12.** A method of manufacturing the resin sheet as recited in any one of claims 1 to 8, the method comprising a step of attaching the barrier film and the shrink film to each other using an adhesive, the barrier film being preliminarily formed into a film-like shape, the shrink film being preliminarily formed into a film-like shape.

Fig. 1

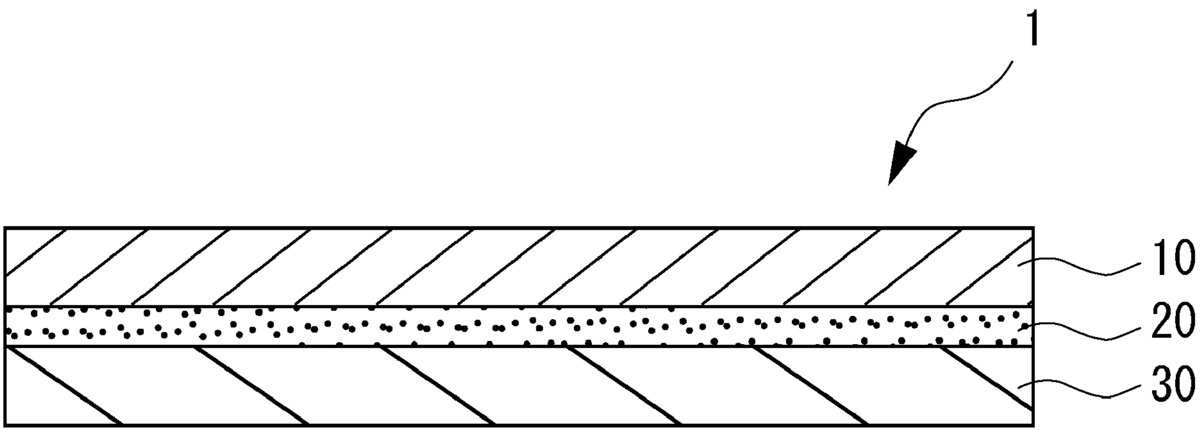


Fig. 2

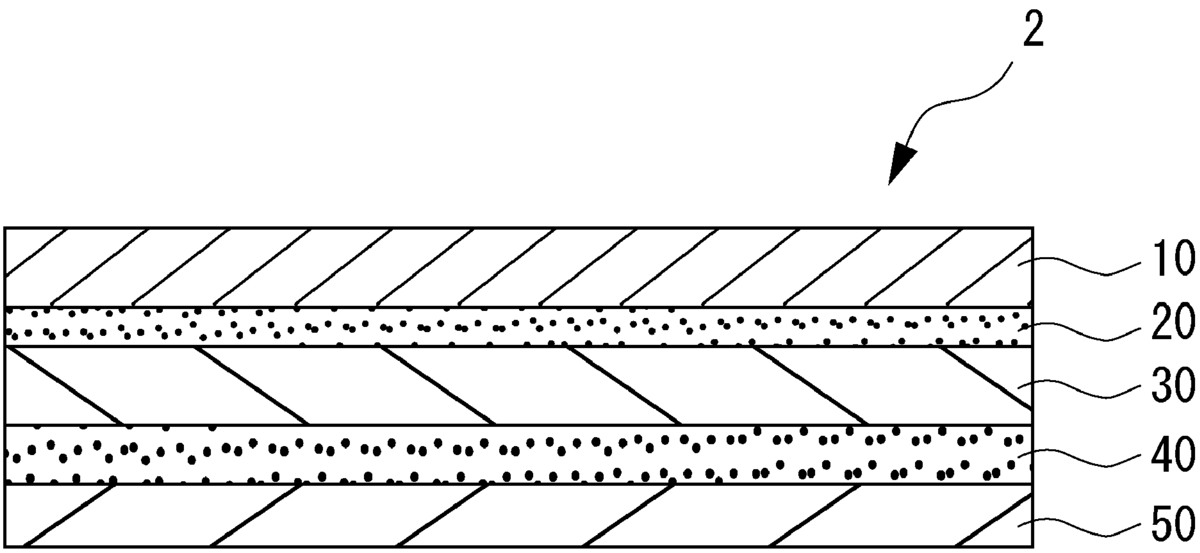

Fig. 3

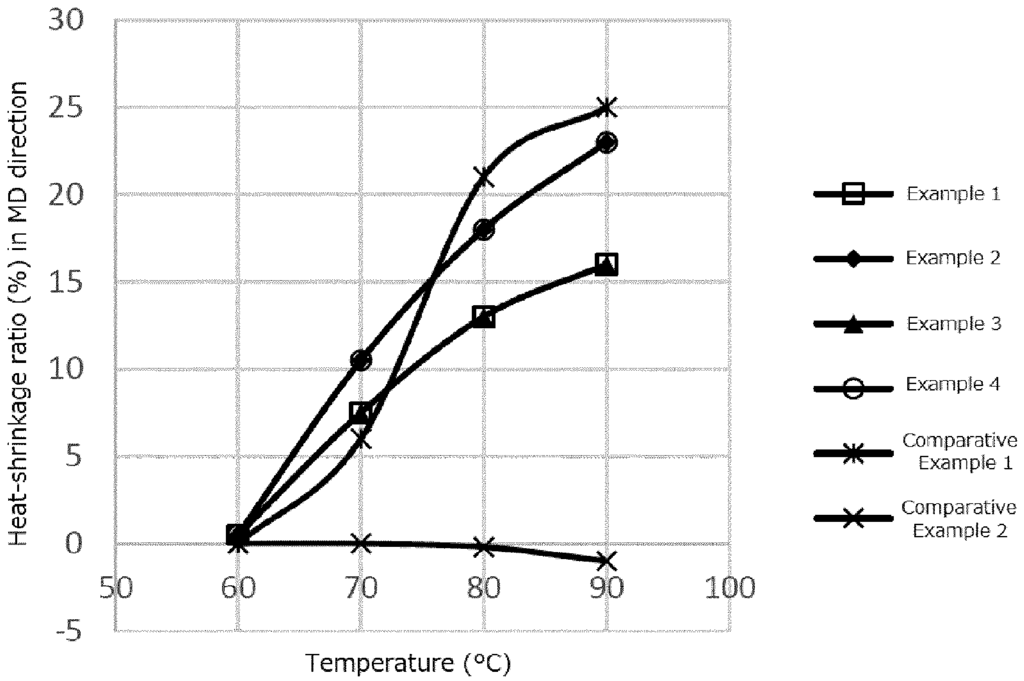
Heat-shrinkage ratio (%) in MD direction
30
25
20
15
10
5
0
-5
50
60
70
80
90
100
Temperature (°C)
Example 1
Example 2
Example 3
Example 4
Comparative Example 1
Comparative Example 2

Fig. 4

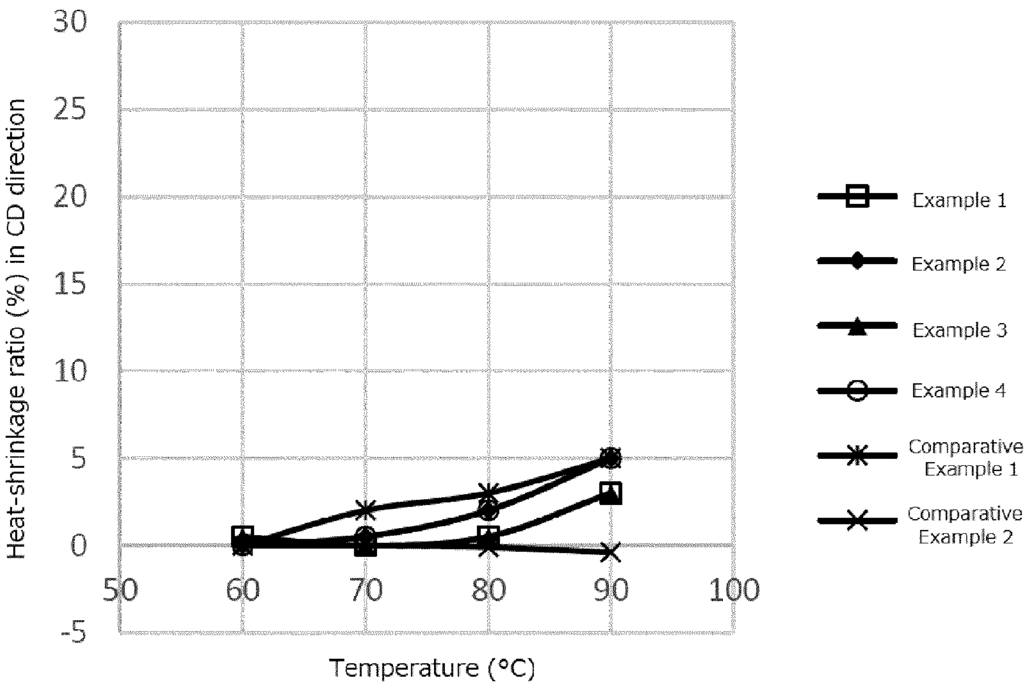
Heat-shrinkage ratio (%) in CD direction
30
25
20
15
10
5
0
-5
50
60
70
80
90
100
Temperature (°C)
Example 1
Example 2
Example 3
Example 4
Comparative Example 1
Comparative Example 2

Europäisches Patentamt
European Patent Office
Office européen des brevets

# EUROPEAN SEARCH REPORT

Application Number
EP 17 20 3641

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>Y | JP 2003 320627 A (ASAHI KASEI CORP) 11 November 2003 (2003-11-11)<br>* paragraphs [0013] - [0025]; claims 1-4 * | 1-8,11, 12<br>9,10 | INV.<br>B32B27/30<br>B32B27/34<br>B32B27/36<br>B32B7/12<br>B32B27/08 |
| Y<br>A | US 2014/053509 A1 (HENDERSON KEVIN O [US] ET AL) 27 February 2014 (2014-02-27)<br>* paragraphs [0049] - [0060] * | 9,10<br>1-8,11, 12 | |
| A | US 2006/222793 A1 (KASHIMURA MASAYUKI [JP] ET AL) 5 October 2006 (2006-10-05)<br>* paragraphs [0006], [0020], [0035] * | 1-12 | |
| A | JP 2005 219801 A (FUJI SEAL INT INC) 18 August 2005 (2005-08-18)<br>* paragraphs [0013] - [0016]; claims 1,2 * | 1-12 | |
| | | | TECHNICAL FIELDS SEARCHED (IPC) |
| | | | B32B |

The present search report has been drawn up for all claims

1

| Place of search | Date of completion of the search | Examiner |
|---|---|---|
| The Hague | 2 March 2018 | Aspeby, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 20 3641

This annex lists the patent family members relating to the patent documents cited in the above-mentioned European search report. The members are as contained in the European Patent Office EDP file on
The European Patent Office is in no way liable for these particulars which are merely given for the purpose of information.

02-03-2018

| Patent document cited in search report | Publication date | Patent family member(s) | Publication date |
|---|---|---|---|
| JP 2003320627 A | 11-11-2003 | NONE | |
| US 2014053509 A1 | 27-02-2014 | EP 2879874 A2 | 10-06-2015 |
| | | US 2014053509 A1 | 27-02-2014 |
| | | US 2014065334 A1 | 06-03-2014 |
| | | US 2017066183 A1 | 09-03-2017 |
| | | WO 2014022673 A2 | 06-02-2014 |
| | | WO 2014022676 A1 | 06-02-2014 |
| US 2006222793 A1 | 05-10-2006 | AT 510688 T | 15-06-2011 |
| | | AU 2004234256 A1 | 11-11-2004 |
| | | CA 2523239 A1 | 11-11-2004 |
| | | CN 1777511 A | 24-05-2006 |
| | | EP 1632346 A1 | 08-03-2006 |
| | | JP 4476935 B2 | 09-06-2010 |
| | | JP WO2004096540 A1 | 13-07-2006 |
| | | KR 20060009865 A | 01-02-2006 |
| | | US 2006222793 A1 | 05-10-2006 |
| | | WO 2004096540 A1 | 11-11-2004 |
| JP 2005219801 A | 18-08-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008284772 A
- JP 2003320627 A